Europäisches Patentamt

European Patent Office

Office européen des brevets

(11) Publication number : **0 669 372 A1**

## (12) EUROPEAN PATENT APPLICATION

(21) Application number : **95301245.7**

(22) Date of filing : **27.02.95**

(51) Int. Cl.⁶ : **C08L 53/00**

(30) Priority : **25.02.94 JP 27144/94**

(43) Date of publication of application :
**30.08.95 Bulletin 95/35**

(84) Designated Contracting States :
**DE FR GB IT**

(71) Applicant : **MITSUI TOATSU CHEMICALS, Inc.**
**2-5 Kasumigaseki 3-chome**
**Chiyoda-Ku Tokyo 100 (JP)**

(71) Applicant : **TOYOTA JIDOSHA KABUSHIKI**
**KAISHA**
**1, Toyota-cho**
**Toyota-shi**
**Aichi-ken 471 (JP)**

(72) Inventor : **Sugihara, Eiichi**
**3-42-7, Hirado,**
**Totsuka-ku**
**Yokohama-shi, Kanagawa (JP)**
Inventor : **Yokote, Sachio**
**1-20-25, Kotubo**
**Zushi-shi, Kanagawa (JP)**
Inventor : **Nishio, Takeyoshi**
**1, Toyota-cho**
**Toyota-shi, Aichi-ken, 471 (JP)**
Inventor : **Nomura, Takao**
**1, Toyota-cho**
**Toyota-shi, Aichi-ken, 471 (JP)**

(74) Representative : **Harvey, David Gareth et al**
**Graham Watt & Co.**
**Riverhead**
**Sevenoaks Kent TN13 2BN (GB)**

(54) **Polypropylene resin composition for motorcar-trimming materials.**

(57) A polypropylene resin composition for use as a motorcar-trimming material comprises 95 to 85% by weight of an ethylene-propylene block copolymer (A) whose ethylene-propylene copolymer part has an average intrinsic viscosity ($[\eta]$) ranging from 7 to 12 g/dl and 5 to 15% by weight of an inorganic filler (B) having an average particle size ranging from 1 to 4 $\mu$m, wherein the composition has a melt index (MI) in the range of from 15 to 40 g/10 min, a flexural modulus (FM) ranging from 2300 to 3000 MPa and a low-temperature brittle point (LB) of less than 30°C and wherein the values FM and LB of the composition satisfy the following inequality : $FH > 8.4 \times LB + 2300$. The polypropylene resin composition is excellent in the balance between rigidity and low-temperature brittle point and in flowability.

EP 0 669 372 A1

The present invention relates to a polypropylene resin composition for use as an motorcar-trimming material, which is excellent in the balance between rigidity and low-temperature brittle point and in flowability.

Recently, it has been desired to make parts used in motorcars lighter to reduce fuel expenses thereof. The motorcar which is made lighter permits reduction of the amount of carbon dioxide released in the air through reduction of waste gases and as a result, this would result in preservation of the earth environment. Parts such as those for motorcars may be made lighter by, for example, a method which makes use of materials having a low specific gravity or a method in which the rigidity of materials are increased to such an extent that the impact strength thereof is not impaired so much to thus make these parts thinner. Among these, preferred is the latter method since the method permits reduction of the cost of materials; the cooling efficiency, in case of injection molding, is improved through the reduction of thickness; and productivity of parts is also improved. In injection molding methods, however, the reduction of thickness is greatly limited by the fluidity of resins selected and the quality of molding machines. For instance, if a material having poor fluidity is used, a high pressure is required for injecting a resin into narrow spaces within a mold and a problems such as mold break sometimes arise unless a molding machine, which satisfies the desired requirements for injection pressure and clamping pressure, is used. However, the use of a molding machine capable of ensuring a high clamping pressure is not favorable from the economical standpoint since it has a large size, is expensive and occupies a large space for foundation.

In respect of the fluidity of a resin, the usual material used for injection molding in general has a melt index ranging from 2 to 15 g/10 min and therefore, it is necessary to adjust the melt index of a polypropylene resin composition to not less than 15 g/10 min in order to reduce the thickness of the molded articles thereof. The fluidity of a resin is generally increased by reducing the molecular weight of the resin used, but the reduction of the molecular weight of the resin often results in reduction of mechanical properties such as impact strength, tensile elongation at break and low-temperature brittle point. To prevent such reduction of impact strength, an ethylene-propylene block copolymer has been used as a polypropylene resin material while reducing the molecular weight of the homopolymer part of the copolymer to improve the fluidity and increasing the molecular weight of the copolymer part thereof to enhance the impact strength. However, if the molecular weight of the homopolymer part is extremely low, the impact strength, in particular, izod impact strength at ordinary temperature of the resin is abruptly lowered. For this reason, there have been used materials having a high rubber content and excellent in impact strength as trimming materials such as those for bumpers of motorcars, as disclosed in J.F. KOKAI Nos. Hei 5-98126 and Hei 5-98127. Moreover, J.P. KOKAI No. Hei 3-197549 discloses a polypropylene resin composition having improved coating properties which comprises, as principal components, a crystalline ethylene-propylene block copolymer, a thermoplastic elastomer having a saturated main chain (such as ethylene-propylene copolymer rubber) and an inorganic filler (such as talc). In addition, J.P. KOKAI No. Hei 5-98122 discloses a polypropylene resin composition comprising a copolymer elastomer selected from the group consisting of ethylene-propylene block copolymers each having a melt index ranging from 30 to 120 g/10 min, ethylene-propylene or butene-1 bipolymer elastomers and terpolymers of ethylene, propylene or butene-1 and cyclopentadiene or ethylidene norbornene; and an inorganic filler. These materials for producing bumpers are sufficiently improved in not only izod impact strength, but also low-temperature brittle point.

On the other hand, J.P. KOKAI No. Sho 58-83015 proposes an ethylene-propylene block copolymer excellent in impact resistance, which has a copolymer part having an ethylene/propylene ratio ranging from 60/40 to 95/5 (% by weight) and an intrinsic viscosity [η] ranging from 4 to 15. Moreover, this patent discloses, in Examples, a two-stage polymerization method for polymerizing the copolymer part of the foregoing block copolymer in which the amount of ethylene to be injected is increased during the latter half of the production process.

However, such materials have low rigidity because of a high content of rubber and are easily scratched unless a fast coating is applied onto the surface thereof. Therefore, they cannot be used as materials for portions such as trimming materials for motorcars to which any fast coating is not applied or which are used as such without applying any coating. Moreover, rubber is expensive as compared with the polypropylene. This leads to an increase in the cost of raw materials and the final product would probably be expensive. It would also be possible to ensure high impact strength by incorporating an increased amount of fillers while adding a corresponding amount of rubber to the resin composition, but the resulting materials cannot be made lighter since the materials or compositions correspondingly have high specific gravities.

Accordingly, it is an object of the present invention to provide a polypropylene resin composition for use as a motorcar-trimming material, which is excellent in the balance between rigidity and low-temperature brittle point and in fluidity.

The inventors of this invention have conducted intensive studies to solve the foregoing problems associated with the conventional techniques, have found out that a material having well-balanced rigidity, low-tem-

EP 0 669 372 A1

perature brittle point and fluidity can be prepared by the use of an ethylene-propylene block copolymer whose copolymer part has an average intrinsic viscosity [η] higher than that of the conventionally used ethylene-propylene block copolymer and thus have completed the present invention.

According to the present invention, the foregoing object can effectively be accomplished by providing a polypropylene resin composition for use as a motorcar-trimming material which comprises 95 to 85% by weight of an ethylene-propylene block copolymer (A) whose ethylene-propylene copolymer parts have an average intrinsic viscosity ([η]) ranging from 7 to 12 g/dl and 5 to 15% by weight of an inorganic filler (B) having an average particle size ranging from 1 to μm, wherein the composition has a melt index (MI) in the range of from 15 to 40 g/10 min, a flexural modulus (FM) ranging from 2300 to 3000 MPa and a low-temperature brittle point (LB) of less than 30 °C and wherein the FM and LB of the composition satisfies the following inequality: FM > 8.4×LB + 2300.

Preferred embodiments of this invention will now be described in more detail.

The ethylene-propylene block copolymer (A) used in the polypropylene resin composition of the present invention comprises copolymer parts having an average intrinsic viscosity (intrinsic viscosity will hereunder be simply referred to as [η]), i.e., an average [η] ranging from 7 to 12 g/dl, preferably 8 to 10 g/dl. This is because if the average [η] of the copolymer parts is less than 7 g/dl, the resulting composition does not have a sufficiently reduced low-temperature brittle point and sufficient impact strength, while if it exceeds 12 g/dl, it is difficult to finely disperse the copolymer parts in the homopolypropylene matrix during melting and kneading ingredients and the block copolymer has insufficient physical properties such as izod impact strength at ordinary temperature and easily undergoes heat decomposition. Therefore, if the copolymer is recycled for reuse, the fluidity and impact strength thereof vary with every repeated reuse and therefore, the block copolymer cannot stably be reused without any trouble.

In the ethylene-propylene block copolymer (A), the weight ratio: ethylene/propylene in the copolymer parts preferably ranges from 0.8 to 2.0. However, the copolymer having a low ethylene/propylene weight ratio is excellent in tensile elongation at break and izod impact strength at ordinary temperature, but has insufficient izod impact strength at low temperature, low-temperature brittle point and rigidity, while the block copolymer having a high ethylene/propylene weight ratio is excellent in izod impact strength at low temperature, low-temperature brittle point and rigidity, but is insufficient in tensile elongation at break and izod impact strength at ordinary temperature, even if the weight ratio falls within the range defined above.

Moreover, if the block copolymer has high fluidity and comprises high molecular weight copolymer parts, the homopolymer parts thereof must have a very low molecular weight. To this end, the polymerization of the homopolymer parts is in general carried out while feeding a large amount of hydrogen into the reaction system to thus reduce the molecular weight thereof. If the high molecular weight copolymer parts are polymerized subsequent to the foregoing polymerization of the homopolymer parts, however, it is difficult to control the molecular weight of the copolymer parts by adjusting the concentration of hydrogen during the polymerization of the copolymer parts unless the hydrogen injected during the polymerization of the homopolymer parts is sufficiently eliminated or degassed and accordingly, it is difficult to obtain copolymer parts having excellent quality. Moreover, the polymerization requires a long time period and results in a low yield. It may also be possible to stepwise polymerize the ethylene-propylene block copolymer (A) in two stages, i.e., to polymerize low molecular weight copolymer part during the former half of the process and to polymerize high molecular weight copolymer part during the latter half of the process. However, the ethylene-propylene block copolymer (A) is preferably polymerized in three stages so that the ethylene/propylene weight ratio of the copolymer part in the first stage-polymerized product (C1) ranges from 0.5 to 1.2, the ethylene/propylene weight ratio of the copolymer part in the second stage-polymerized product (C2) ranges from 0.9 to 2.0, the ethylene/propylene weight ratio of the copolymer part in the third stage-polymerized product (C3) ranges from 1.5 to 3.0, the ethylene/propylene weight ratio of the copolymer part in C2 + C3 ranges from 1.3 to 2.5; the rate of C1 ranges from 30 to 60% by weight, the rate of C2 ranges from 20 to 50% by weight and the rate of C3 ranges from 20 to 50% by weight, on the basis of the total amount of the products (C1 + C2 + C3), which have well-balanced flexural modulus, impact strength, elongation and fluidity as compared with those comprising one- or two-stage polymerized copolymer parts.

Preferably, the ethylene/propylene weight ratio of the copolymer part in C2 ranges from 1.1 to 2 times the ethylene/propylene weight ratio of the copolymer part in C1 and 0.9 to 0.5 time the ethylene/propylene weight ratio of the copolymer part in C3.

If the ethylene/propylene weight ratio of the copolymer part in C1 is less than 0.5 or the rate of C1 with respect to (C1 + C2 + C3) exceeds 60% by weight, the resulting block copolymer is not necessarily sufficient in low-temperature brittle point and rigidity; if the ethylene/propylene weight ratio of the copolymer part in C3 exceeds 3.0 or the rate cf C1 with respect to (C1 + C2 + C3) is less than 30% by weight, the resulting block copolymer is not necessarily sufficient in tensile elongation at break and izod impact strength at ordinary temperature. If the ethylene/propylene weight ratio of the copolymer part in C1 exceeds 1.2 or the ethylene/propylene weight ratio of the copolymer part in C3 is less than 1.5, the resulting block copolymer is not superior in physical properties to those comprising one-stage polymerized copolymer parts.

Further, if the ethylene/propylene weight ratio of the copolymer part in C2 is less than 0.9, it is impossible to stably polymerize the third stage-polymerized product (C3) and the block copolymer accordingly has insufficient low-temperature impact strength. In addition, if the ethylene/propylene weight ratio or the copolymer part in C2 exceeds 2.0, it is necessary to feed a large amount of ethylene into the reaction system after the polymerization of the first stage polymerized product (C1). This results in a production of a block copolymer having a very high ethylene content and the formation of very high molecular weight copolymers, as by-products, which cannot sufficiently be dispersed during pelletizing the product. For this reason, the resulting block copolymer is sometimes insufficient in the tensile elongation at break.

The ethylene-propylene block copolymer (A) preferably has a content of the copolymer parts (C1 + C2 + C3) ranging from 15 to 25% by weight. This is because if the content is less than 15% by weight, the block copolymer does not exhibit desired izod impact strength at low temperature, low-temperature brittle point and tensile elongation at break, while if it exceeds 25% by weight, the polypropylene powder is highly sticky and various problems may often arise during post-treatments after polymerization, blending with fillers and pelletizing processes.

The average [$\eta$] of the homopolymer parts in the ethylene-propylene block copolymer used in the polypropylene resin composition is selected in such a manner that the MI value is not less than 15 g/10 min, preferably not less than 20 g/10 min, more preferably not less than 25 g/10 min and most preferably not less than 30 g/10 min after fillers are incorporated into the resin and the composition is pelletized. This is because if it is less than 15 g/10 min, the block copolymer has insufficient fluidity and is unsuitable for use in making parts thinner. The upper limit thereof is not specifically limited, but preferably set at 40 g/10 min, since a problem of, for instance, flash formation arises during injection molding. Moreover, the block copolymer whose homopolymer parts have stereoregularity such that the [mmmm] content is not less than 97% is excellent in rigidity.

The ethylene-propylene block copolymer (A) used in the polypropylene resin composition may be those prepared by the usual slurry polymerization, bulk polymerization and gas phase polymerization, but the slurry polymerization is particularly preferred since atactic polypropylenes, low molecular weight isotactic polypropylenes and low molecular weight copolymer parts which would impair the balance of rigidity, heat resistance, izod impact strength at ordinary temperature and low-temperature brittle point are removed due to the presence of a polymerization solvent thus the most excellent ethylene-propylene block copolymer can be prepared.

The polypropylene resin composition comprises the ethylene-propylene block copolymer (A) in an amount ranging from 95 to 85% by weight. The content of the ethylene-propylene block copolymer (A) in the composition is determined depending on the required amount of the inorganic filler used together and the reason for this limitation is as follows.

The inorganic fillers used in the polypropylene resin composition are those having an average particle size ranging from 1 to 4 $\mu$m, preferably 1 to 3 $\mu$m, more preferably 1.5 to 2.5 $\mu$m and most preferably 1.8 to 2.3 $\mu$m. Specific examples of such inorganic fillers are talc, calcium carbonate, carbon black, silica, clay, potassium titanate and magnesium oxide, with talc being preferably used in the invention. The use of inorganic fillers having an average particle size of less than 1 $\mu$m is not preferred since this leads to reduction of the rigidity of the resulting composition, while the use of those having an average particle size of more than 4 $\mu$m is not likewise preferred since this results in the formation of a composition having insufficient izod impact strength, low-temperature brittle point and tensile elongation at break. Moreover, it is also possible to use fibrous fillers such as magnesium sulfate whisher and potassium titanate whisker instead of the whole or a part of the inorganic filler in such an amount that they do not greatly affect the anisotropy of the mold shrinkage factor.

The inorganic filler is used in an amount ranging from 5 to 15% by weight, preferably 7 to 13% by weight, more preferably 8 to 12 % by weight and most preferably 9 to 12% by weight. If the amount thereof is less than 5% by weight, the resulting resin composition has insufficient rigidity when it is formed into thinner parts. On the other hand, it exceeds 15% by weight, it is impossible to form lightweight motorcar-trimming materials as compared with the conventional ones and there are observed noticeable flow marks and weld lines on the surface of the materials.

The polypropylene resin composition of the present invention has a composition discussed above, but the composition should further satisfy the requirement such that the flexural modulus is more than 2300 MPa, preferably more than 2300 MPa and not more than 3000 MPa, more preferably 2350 to 2800 MPa and most preferably 2400 to 2700 MPa. If the flexural modulus is not more than 2300 MPa, various inconvenience occurs, for instance, the composition caves in when pressed by a finger tip. For this reason, commercial value of the composition is impaired since the polypropylene resin composition is used as a motorcar-trimming material.

Furthermore, the polypropylene resin composition of the present invention should satisfy the following relation between the flexural modulus (FM; unit: MPa) and low-temperature brittle point (LB; unit: °C).

$$FM > 8.4 \times LB + 2300$$

and the following inequality concerning LB:

$$LB < 30$$

The polypropylene resin composition having a high low-temperature brittle point which fails to meet the foregoing inequality exhibits ill-balanced flexural modulus and low-temperature brittle point and may be damaged during, for instance, assembling operations at a low temperature conditions. Moreover, if the low-temperature brittle point is not less than 30°C, the resulting article is highly brittle and thus unsuitable for use as a motorcar-trimming material.

The resin composition may comprise resins other than the ethylene-propylene block copolymer (A) in such an amount that the presence thereof does not greatly affect desired physical properties of the resulting composition. Examples of such other resins are ethylene-propylene copolymer elastomers (EPR), ethylene-propylenediene copolymer elastomers (EPDH), ethylene/butene-1 copolymer elastomers (EBM), very low density polyethylenes, styrene-butadiene block copolymer elastomers, styrene-butadiene random copolymer elastomers and styrene-isoprene block copolymer elastomers.

The polypropylene resin composition of the present invention may further comprise other additives commonly used in the conventional motorcar-trimming materials, such as weatherability-improving agents, heat resistance-improving agents, dispersants and/or pigments.

The polypropylene resin composition of the present invention may be formed into desired molded articles by any conventional method which comprises the steps of blending polypropylene, inorganic fillers and various kinds of additives in a ribbon blender or a Henschel mixer, then melting and kneading the resulting blend in a device such as a Banbury mixer, a hot mill, an extruder or Ko-kneader to form the blend into pellets and injection-molding the pellets into desired articles.

The polypropylene resin composition of the present invention is used as a motorcar-trimming material. The term "motorcar-trimming material" herein used means e.g. front pillars, center pillars, rear pillars, door trims, armrests and console-boxes. These trimming materials can in general be formed into desired shapes through injection molding under usual conditions. These parts for motorcars preferably satisfy requirements for izod impact strength and tensile elongation at break in addition to the requirement for the low-temperature brittle point, in order to cope with the impact applied to the parts during assemblage and practical use of motorcars. For instance, the izod impact strength at 23°C is not less than 4 kg/cm$^2$, more preferably not less than 5 kg/cm$^2$ and most preferably not less than 6 kg/cm$^2$ and the tensile elongation at break is not less than 30%, more preferably not less than 100% and most preferably not less than 300%.

The present invention will hereunder be described in more detail with reference to the following Examples.

Preparation Examples (Method for Preparing Propylene-Ethylene Block Copolymers)

To a 250ℓ volume autoclave made of SUS, there was charged 100ℓ of heptane in a nitrogen atmosphere and the space within the polymerization system was replaced with propylene. On the other hand, there was prepared, in a glass container, a catalyst system comprising heptane, a supported catalyst component obtained by adding diethyl phthalate to magnesium chloride, pulverizing the mixture, subjecting the pulverized product to a heat treatment together with titanium tetrachloride and then washing, triethylaluminum and cyclohexylmethyldimethoxysilane, then the catalyst was introduced into the autoclave to carry out the polymerization at a temperature of 75°C and a pressure of 5 kg/cm$^2$ (gage pressure) for 4 hours. The hydrogen concentration was controlled during the polymerization to thus adjust the partial pressure of the hydrogen in the autoclave such that the resulting polypropylene had an intrinsic viscosity [η] of about 1. The propylene homopolymer part was thus formed by the foregoing operations.

Then the pressure within the autoclave was reduced by evacuating with a vacuum pump to remove the propylene monomer and hydrogen remaining in the autoclave and then polymerization was carried out at a polymerization temperature of 50°C and a polymerization pressure of 1.8 kg/cm$^2$ (gage pressure) for 2 hours while controlling the partial pressures of EL, PL and hydrogen within the gas phase so that the weight ratio of ethylene (EL)/propylene (PL) in the copolymer part of the resulting copolymer was 1.5 and the value [η] was about 9. The polymerization was performed in such a manner that the rate of the copolymer parts is about 18% by weight on the basis of the weight of the entire polymer to give propylene-ethylene block copolymer PP-1 listed in Table 1.

The foregoing polymerization procedures were repeated while variously changing the hydrogen concentration during the homopolymerization of propylene, the weight ratio of EL/PL and the hydrogen concentration during the copolymerization of propylene-ethylene to thus give propylene-ethylene block copolymers PP-2 to PP-6, PP-9 and PP-10 listed in Table 1.

The foregoing polymerization procedures were repeated by carrying out the copolymerization of propylene-ethylene in three steps while changing the weight ratio of EL/PL which was gradually increased during copolymerization to thus give propylene-ethylene block copolymers PP-7, PP-8 and PP-11 listed in Table 1.

Incidentally, the compositions and characteristic properties of the ethylene-propylene block copolymers PP-1 to PP-11 prepared by the above procedures and used in the following Examples and Comparative Examples are summarized in the Table 1.

In the following Examples and Comparative Examples, the value [$\eta$] of the homopolymer part of polypropylene stands for the intrinsic viscosity determined using the polymer sampled after the polymerization of the homopolymer parts, the value [$\eta$] of the copolymer part in the first stage-polymerized product C1 stands for the intrinsic viscosity determined using the polymer sampled after the polymerization of Component C1, the value [$\eta 2$] of the copolymer part in the second stage-polymerized product C2 stands for the intrinsic viscosity determined using the polymer sampled after the polymerization of Component C2 and the value [$\eta 3$] of the copolymer part in the third stage-polymerized product C3 stands for the intrinsic viscosity determined using the polymer sampled after the polymerization of Component C3. The homopolymer part [mmmm] was determined or analyzed by $^{13}$C-NMR spectrometry; the value MI was determined by the method as defined in ASTM D-1238 (load: 2.16 kg); the flexural modulus (FM) was determined by the method defined in ASTM D-790 (bending rate 2 mm/min); the izod impact strength was determined at both 23 and -30 °C according to the method defined in ASTM D-256 (notched); the tensile elongation at break was determined according to ASTM D-638 (tensile speed: 10 mm/min); and the low-temperature brittle point was determined by the method as defined in ASTM D-746. Moreover, the average particle size of the inorganic filler was determined by a laser diffraction type particle size distribution-analyzing method (Device: SALD-2000A available from Shimadzu Corporation). Moreover, the weioght ratio of EL/PL in the copolymer parts of the block copolymer are abbreviated "E/P1" for Component C1 , "E/P2" for Component C2 and "E/P3" for Component C3 respectively. Moreover, total amount of the copolymer parts FrTo, the value [$\eta$]av which is an average of the values [$\eta$] for the copolymer part and the value E/PAv which is an averaged ethylene/propylene ratio of the copolymer part are defined by the following formulae:

$$FrTo = C1 + C2 + C3$$
$$[\eta]av = (C1 \times [\eta 1] + C2 \times [\eta 2] + C3 \times [\eta 3])/(C1 + C2 + C3)$$
$$E/PAv = (C1 \times E/P1 + C2 \times E/P2 + C3 \times E/P3)/(C1 + C2 + C3)$$

Examples 1 to 3

There were blended, in a Henschel mixer, 92 parts by weight of each ethylene-propylene block copolymer PP-1 to PP-3 prepared by the slurry polymerization method, 8 parts by weight of talc "LHS300" (available from Fuji Talc Co., Ltd.; average particle size: 2 μm; hereunder simply referred to as "Talc 1"), 0.05 part by weight of "Ionol" and 0.1 part by weight of "Irganox 1010" as heat stabilizers and 0.1 part by weight of calcium stearate as a dispersant, followed by extrusion of the resulting blend under extrusion conditions, i.e., 220°C and 15 kg/hr in a twin-screw extruder equipped with a 36 mm kneading desk to give pellets, formation of a specimen for use in physical property-determination in an injection molder having a clamp pressure of 100 ton and determination of physical properties. Table 2 shows the compounding ratio of the ethylene-propylene block copolymer to the talc and the MI value, flexural modulus, izod impact strength at 23°C, izod impact strength at -30°C, tensile elongation at break, low-temperature brittle point and specific gravity of each resulting resin composition.

Comparative Examples 1 and 2

The same procedures used in Example 1 were repeated except that ethylene-propylene block copolymers PP-4 and PP-5 having average [$\eta$] of 15 and 4 respectively were substituted for the ethylene-propylene block copolymer used in Example 1 to thus pelletize the blend, form Specimens for use in physical property-determination and determine physical properties thereof. Table 2 shows the compounding ratio of the ethylene-propylene block copolymer to the talc and the MI value, flexural modulus, izod impact strength at 23°C, izod impact strength at -30°C, tensile elongation at break, low-temperature brittle point and specific gravity of each resulting resin composition. The resin composition prepared using the ethylene-propylene block copolymer PP-4 having average [$\eta$] of 15 was inferior in the tensile elongation at break and izod impact strength at 23°C, while the resin composition prepared using the ethylene-propylene block copolymer PP-5 having average [$\eta$] of 4 was inferior in the tensile elongation at break, izod impact strength at 23°C, izod impact strength at -30°C and low-temperature brittle point, as compared with the resin composition prepared in Example 1.

Comparative Example 3

The same procedures used in Example 1 were repeated except that an ethylene-propylene block copolymer PP-6 having a high average [η] and stereoregularity approximately identical to that of the usual polypropylene (which was beyond the scope of the present invention) was substituted for the ethylene-propylene block copolymer used in Example 1 to thus pelletize the blend, form a specimen for use in physical property-determination and determine physical properties thereof. Table 2 shows the compounding ratio of the ethylene-propylene block copolymer to the talc and the MI value, flexural modulus, izod impact strength at 23°C, izod impact strength at -30°C, tensile elongation at break, low-temperature brittle point and specific gravity of the resulting resin composition. The resulting resin comprised homopolymer parts having low stereoregularity and a low flexural modulus. Moreover, the resin composition was also insufficient in, for instance, low-temperature brittle point and izod impact strength at -30°C. Moreover, the composition had a low MI value and flow marks were formed during molding.

Comparative Example 4

The same procedures used in Example 1 were repeated except that talc "80R" (available from Asada Flour Milling Co., Ltd.; average particle size: 9μm; hereunder simply referred to as "Talc 2") was substituted for Talc 1 used in Example 1 to thus pelletize the blend, form a specimen for use in physical property-determination and determine physical properties thereof. Table 2 shows the compounding ratio of the ethylene-propylene block copolymer to the talc and the MI value, flexural modulus, izod impact strength at 23°C, izod impact strength at -30°C , tensile elongation at break, low-temperature brittle point and specific gravity of the resulting resin composition. The resulting resin composition was inferior to that prepared in Example 1 in tensile elongation at break, izod impact strength at 23°C, izod impact strength at -30°C and low-temperature brittle point.

Comparative Example 5

The same procedures used in Example 1 were repeated except that talc (hereunder simply referred to as "Talc 3") having an average particle size of 0.7 μm which had been obtained by classifying talc "FFR" (available from Asada Flour Milling Co., Ltd.; average particle size: 1.5 μm) with a classifying device was substituted for Talc 1 used in Example 1 to thus pelletize the blend, form a specimen for use in physical property-determination and determine physical properties thereof. Table 2 shows the compounding ratio of the ethylene-propylene block copolymer to the talc and the MI value, flexural modulus, izod impact strength at 23°C , izod impact strength at -30°C, tensile elongation at break, low-temperature brittle point and specific gravity of the resulting resin composition. The resulting resin composition was inferior to that prepared in Example 1 in flexural modulus.

Examples 4 and 5

The same procedures used in Example 1 were repeated except that 90 parts by weight of ethylene-propylene block copolymers PP-7 and PP-8 polymerized while changing the ethylene/propylene ratio in such a manner that the copolymer part comprised 3 components were substituted for the block copolymer used in Example 1 and that 10 parts by weight of talc "SKC2" (available from K.K. Shokozan, hereunder simply referred to as "Talc 4") having an average particle size of 2.2 μm was substituted for Talc 1 used in Example 1 to thus pelletize the resulting blends, form specimens for use in physical property-determination and determine physical properties of the specimens. Table 3 shows the compounding ratio of the ethylene-propylene block copolymer to the talc and the MI value, flexural modulus, izod impact strength at 23°C , izod impact strength at -30°C, tensile elongation at break, low-temperature brittle point and specific gravity of each resulting resin composition. Thus, there were prepared resin compositions superior to the resin compositions prepared using, for instance, PP-1 whose copolymer part was prepared through one-stage polymerization technique in the balance between flexural modulus and impact strength.

Example 6

The same procedures used in Example 4 were repeated except that 45 parts by weight each of ethylene-propylene block copolymers PP-9 and PP-10 were substituted for the block copolymer used in Example 4 to thus pelletize the resulting blend, form a specimen for use in physical property-determination and determine physical properties thereof. Table 3 shows the compounding ratio of the ethylene-propylene block copolymer to the talc and the MI value, flexural modulus, izod impact strength at 23°C, izod impact strength at -30°C, tensile elongation at break, low-temperature brittle point and specific gravity of each resulting resin composition.

Example 7

The same procedures used in Example 4 were repeated except that the ethylene-propylene block copolymer PP-11 was substituted for the block copolymer used in Example 4 to thus pelletize the blend, form a specimen for use in physical property-determination and determine physical properties thereof. Table 3 shows the compounding ratio of the ethylene-propylene block copolymer to the talc and the MI value, flexural modulus, izod impact strength at 23°C, izod impact strength at -30°C, tensile elongation at break, low-temperature brittle point and specific gravity of the resulting resin composition.

Example 8

The same procedures used in Example 4 were repeated except that 87 parts by weight of PP-8 was used as a base PP and that "EPO7P" (available from Japan Synthetic Rubber Co., Ltd.; Mooney viscosity: 70; ethylene content: 73% by weight) was used as an EPR to thus pelletize the blend, form a specimen for use in physical property-determination and determine physical properties thereof. Table 3 shows the compounding ratio of the ethylene-propylene block copolymer to the talc and the MI value, flexural modulus izod impact strength at 23°C , izod impact strength at -30°C, tensile elongation at break, low-temperature brittle point and specific gravity of the resulting resin composition. The resulting resin composition had a flexural modulus lower than that observed for the resin composition prepared in Example 4, but was improved in the izod impact strength and low-temperature brittle point. The composition was used for producing rear pillars (provided with 1.5, 2.0 and 3.0 mm ribs respectively), but any problem did not arise.

Comparative Example 7

The same procedures used in Example 8 were repeated except that 97 parts by weight of PP-8 was used and that the use of talc was omitted to thus pelletize the blend, form a specimen for use in physical property-determination and determine physical properties thereof. Table 3 shows the compounding ratio of the ethylene-propylene block copolymer to the talc and the MI value, flexural modulus, izod impact strength at 23°C, izod impact strength at -30°C , tensile elongation at break, low-temperature brittle point and specific gravity of the resulting resin composition. The resin composition was used for producing rear pillers as in Example 8, but the pillers were too soft and caved in when pressed by a finger tip because of the low flexural modulus of the composition.

Comparative Example 8

The same procedures used in Example 8 were repeated except that 57 parts by weight of PP-8 was used and that 40 parts by weight of talc was used to thus pelletize the blend, form a specimen for use in physical property-determination and determine physical properties thereof. Table 3 shows the compounding ratio of the ethylene-propylene block copolymer to the talc and the MI value, flexural modulus, izod impact strength at 23°C, izod impact strength at -30°C, tensile elongation at break, low-temperature brittle point and specific gravity of the resulting resin composition. The resin composition had a low MI value and was inferior to the resin composition of Example 8 in izod impact strength, low-temperature brittle point and tensile elongation at break. Moreover, the composition was used for producing rear pillers as in Example 8, but ribs having a thickness of 1.5 mm were defective due to insufficient charge since the resin composition had poor fluidity. In addition, the molded article had prominent flow marks and weld lines on the surface.

### Table 1

| | PP-1 | PP-2 | PP-3 | PP-4 | PP-5 | PP-6 |
|---|---|---|---|---|---|---|
| $[\eta]$ for Homo. Part (g/dl) | 0.95 | 0.98 | 0.91 | 0.80 | 1.3 | 1.5 |
| [mmmm] for Homo. Part (%) | 98 | 98 | 98 | 98 | 98 | 96 |
| Amount of Copolymer Part (Co. M.)(wt%) | | | | | | |
| Component C1 | 18 | 19 | 18.5 | 18.2 | 19.5 | 18.0 |
| Component C2 | 0 | 0 | 0 | 0 | 0 | 0 |
| Component C3 | 0 | 0 | 0 | 0 | 0 | 0 |
| Total Amount FrTo | 18 | 19 | 18.5 | 18.2 | 19.5 | 18.0 |
| $[\eta]$ for Co. M. (g/dl) | | | | | | |
| Component C1 $[\eta 1]$ | 9.0 | 7.5 | 11.5 | 15.0 | 4.0 | 4.0 |
| Component C2 $[\eta 2]$ | -- | -- | -- | -- | -- | -- |
| Component C3 $[\eta 3]$ | -- | -- | -- | -- | -- | -- |
| Average: $[\eta]$av | 9.0 | 7.5 | 11.5 | 15.0 | 4.0 | 4.0 |
| Ethylene/Propylene Ratio of Co. M. | | | | | | |
| Component C1 E/P1 | 1.5 | 1.4 | 2.0 | 3.0 | 1.2 | 1.5 |
| Component C2 E/P2 | -- | -- | -- | -- | -- | -- |
| Component C3 E/P3 | -- | -- | -- | -- | -- | -- |
| Average: E/PAv | 1.5 | 1.4 | 2.0 | 3.0 | 1.2 | 1.5 |

## Table 1 (continued)

|  | PP-7 | PP-8 | PP-9 | PP-10 | PP-11 |
|---|---|---|---|---|---|
| [$\eta$] for Homo. Part (g/dl) | 0.94 | 0.95 | 0.94 | 0.95 | 0.98 |
| [mmmm] for Homo. Part (%) | 98 | 98 | 98 | 98 | 98 |
| Amount of Copolymer Part (Co. M.)(wt%) | | | | | |
| Component C1 | 9.0 | 6.0 | 18.0 | 18.0 | 5 |
| Component C2 | 4.0 | 4 | 0 | 0 | 8 |
| Component C3 | 5.0 | 7 | 0 | 0 | 5 |
| Total Amount FrTo | 18.0 | 17.0 | 18.0 | 18.0 | 18.0 |
| [$\eta$] for Co. M. (g/dl) | | | | | |
| Component C1 [$\eta$1] | 6.0 | 4.0 | 6.2 | 12.8 | 3 |
| Component C2 [$\eta$2] | 10 | 11 | -- | -- | 7.5 |
| Component C3 [$\eta$3] | 13 | 13 | -- | -- | 12 |
| Average: [$\eta$]av | 8.8 | 9.4 | 6.2 | 12.8 | 7.5 |
| Ethylene/Propylene Ratio of Co. M. | | | | | |
| Component C1  E/P1 | 0.9 | 1.0 | 1.0 | 1.4 | 0.7 |
| Component C2  E/P2 | 1.1 | 1.7 | -- | -- | 1.2 |
| Component C3  E/P3 | 1.9 | 2.1 | -- | -- | 1.8 |
| Average: E/PAv | 1.2 | 1.6 | 1.0 | 1.4 | 1.1 |

Table 2

| | Examples (*: Comparative Example) | | | | | | | |
|---|---|---|---|---|---|---|---|---|
| | 1 | 2 | 3 | 1* | 2* | 3* | 4* | 5* |
| PP-1 (part by weight) | 92 | | | | | | 92 | 92 |
| PP-2 (part by weight) | | 92 | | | | | | |
| PP-3 (part by weight) | | | 92 | | | | | |
| PP-4 (part by weight) | | | | 92 | | | | |
| PP-5 (part by weight) | | | | | 92 | | | |
| PP-6 (part by weight) | | | | | | 92 | | |
| Talc-1 (part by weight) | 8 | 8 | 8 | 8 | 8 | 8 | | |
| Talc-2 (part by weight) | | | | | | | 8 | |
| Talc-3 (part by weight) | | | | | | | | 8 |
| MI (g/10 min) | 30 | 27 | 26 | 28 | 25 | 12 | 30 | 30 |
| Tensile Elongation at Break (%) | 200 | 300 | 150 | 45 | 60 | 100 | 50 | 210 |
| Flexural Modulus (MPa) | 2400 | 2390 | 2450 | 2300 | 2210 | 2110 | 2400 | 2200 |
| Izod Impact Strength at 23°C (J/m) | 60 | 65 | 55 | 40 | 45 | 48 | 45 | 60 |
| Izod Impact Strength at -30°C (J/m) | 25 | 24 | 28 | 18 | 15 | 13 | 20 | 26 |
| Low-Temperature Brittle Point: LB (°C) | 4 | 6 | 2 | 4 | 16 | 14 | 10 | 4 |
| Specific Gravity | 0.95 | 0.95 | 0.95 | 0.95 | 0.95 | 0.95 | 0.95 | 0.95 |
| 8.4 × LB + 2300 | 2334 | 2350 | 2317 | 2333 | 2434 | 2418 | 2384 | 2334 |

Table 3

| | Examples (*: Comparative Example) | | | | | | |
|---|---|---|---|---|---|---|---|
| | 4 | 5 | 6 | 7 | 8 | 7* | 8* |
| PP-7 (part by weight) | 90 | | | | 87 | 97 | 57 |
| PP-8 (part by weight) | | 90 | | | | | |
| PP-9 (part by weight) | | | 45 | | | | |
| PP-10 (part by weight) | | | 45 | | | | |
| PP-11 (part by weight) | | | | 90 | | | |
| EPR (part by weight) | | | | | 3 | 3 | 3 |
| Talc-4 (part by weight) | 10 | 10 | 10 | 10 | 10 | 0 | 40 |
| MI (g/10 min) | 31 | 28 | 30 | 32 | 27 | 28 | 15 |
| Tensile Elongation at Break (%) | 400 | 300 | 400 | 150 | 500 | 500 | 10 |
| Flexural Modulus (MPa) | 2500 | 2550 | 2550 | 2410 | 2400 | 1600 | 3900 |
| Izod Impact Strength at 23°C (J/m) | 71 | 65 | 68 | 60 | 80 | 90 | 48 |
| Izod Impact Strength at -30°C (J/m) | 35 | 31 | 32 | 21 | 39 | 45 | 12 |
| Low-Temperature Brittle Point: LB (°C) | 4 | 6 | 4 | 8 | -2 | -7 | >30 |
| Specific Gravity | 0.97 | 0.97 | 0.97 | 0.97 | 0.97 | 0.90 | 1.22 |
| $8.4 \times LB + 2300$ | 2334 | 2350 | 2334 | 2367 | 2283 | 2241 | 2552 |

The polypropylene resin composition of the present invention is excellent in the balance between flexural modulus and low-temperature brittle point as compared with the conventional motorcar-trimming materials which are composite materials with fillers and is thus the most suitable material for use in making parts lighter by reducing the amount of fillers to be incorporated or reducing the thickness of such parts. Moreover, the polypropylene resin-composition of the present invention is also excellent in fluidity and accordingly permits the production of injection-molded articles whose thickness is significantly reduced. The polypropylene resin composition of the present invention is the most suitable material for use in the production of motorcar-trimming materials, in particular, those which should satisfy the requirement for relatively high rigidity, such as pillars, roof sides and door trims. The motorcar-trimming materials molded from the polypropylene resin composition of the present invention may be fitted to motorcars without any post-treatment, but delustering paint and varnish may be applied onto the surface thereof or leather, synthetic leather and/or cloth may be pasted thereon with the aid of, for instance, an adhesive. Moreover, fibers such as nylon and polyester fibers may be implanted in the trimming materials. Further the polypropylene resin composition of the present invention is excellent in fluidity and therefore, may be used in low pressure stamping processes and the composition may be adhered to a skin material by stamping during the molten state thereof without using any adhesive.

The polypropylene resin composition of the present invention mainly comprises polypropylene and inorganic fillers and may thus be recycled for reuse without any trouble. Moreover, it is possible to pulverize defective molded articles and to reuse the same in injection molding together with a small amount of the virgin material, waste materials generated through the color changeover may be pulverized, pigmented to a variety of colors such, as a black color and applied to parts other than the motorcar-trimming materials. In addition, waste materials may be used in combination with other polypropylene resin composition.

**Claims**

1.  A polypropylene resin composition for use as a motorcar-trimming material comprising 95 to 85% by weight of an ethylene-propylene block copolymer (A) whose ethylene-propylene copolymer part has an average intrinsic viscosity ([η]) ranging from 7 to 12 g/dl and 5 to 15% by weight of an inorganic filler (B) having an average particle size ranging from 1 to 4 μm, wherein the composition has a melt index (MI) in the range of from 15 to 40 g/10 min, a flexural modulus (FM) ranging from 2300 to 3000 MPa and a low-temperature brittle point (LB) of less than 30°C and wherein the values FM and LB of the composition satisfy the following inequality: FM > 8.4 × LB + 2300.

2.  The polypropylene resin composition for use as a motorcar-trimming material as set forth in claim 1 wherein the ethylene-propylene block copolymer (A) is a copolymer prepared by three-stage polymerization, the ethylene/propylene weight ratio of the copolymer part in the first stage-polymerized product (C1) ranges from 0.5 to 1.2, the ethylene/propylene weight ratio of the copolymer part in the second stage-polymerized product (C2) ranges from 0.9 to 2.0, the ethylene/propylene weight ratio of the copolymer part in the third stage-polymerized product (C3) ranges from 1.5 to 3.0, the ethylene/propylene weight ratio of the copolymer part in C2 + C3 ranges from 1.3 to 2.5; the rate of C1 ranges from 30 to 60% by weight, the rate of C2 ranges from 20 to 50% by weight and the rate of C3 ranges from 20 to 50% by weight, on the basis of the total amount of the products (C1 + C2 + C3).

3.  A motorcar-trimming material produced by molding the polypropylene resin composition as set forth in claim 1 or 2.

EP 0 669 372 A1

| European Patent Office | EUROPEAN SEARCH REPORT | Application Number |
| --- | --- | --- |
| | | EP 95 30 1245 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| Y | EP-A-0 027 386 (MITSUI PETROCHEMICAL IND.)<br>* page 32, line 4 - line 6 *<br>* page 5, line 35 - page 6, line 17 *<br>--- | 1 | C08L53/00 |
| Y | EP-A-0 509 662 (UBE INDUSTRIES)<br>* page 2, line 53 - page 3, line 10; claim 1; examples *<br>--- | 1 | |
| A | EP-A-0 534 776 (SUMITOMO CHEMICAL CO.)<br>* page 2, line 23 - line 29; claims 1,5,7; example 3 *<br>----- | 1 | |
| | | | **TECHNICAL FIELDS SEARCHED** (Int.Cl.6) |
| | | | C08L<br>C08F |

The present search report has been drawn up for all claims

| Place of search | Date of completion of the search | Examiner |
| --- | --- | --- |
| THE HAGUE | 22 May 1995 | Loiselet-Taisne, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)